# EUROPEAN PATENT SPECIFICATION

(11) **EP 4 080 187 B1**
(45) Date of publication and mention of the grant of the patent: **11.02.2026**
(21) Application number: 21201893.1
(22) Date of filing: 11.10.2021
(51) Int. Cl.: G01M 7/06, G01M 7/02

(54) **ACCESSORY PLATE, FIXTURE AND MACHINE FOR VIBRATION TESTS**
ZUBEHÖRPLATTE, BEFESTIGUNG UND MASCHINE FÜR VIBRATIONSTESTS
PLAQUE ACCESSOIRE, DISPOSITIF DE FIXATION ET MACHINE POUR TESTS DE VIBRATION

(30) Priority: 20.04.2021 IT 202100009932
(43) Date of publication of application: 26.10.2022
(73) Proprietor: CENTROTECNICA S.r.l., 20060 Masate (MI) (IT)
(72) Inventor: MAZZOCCHI, Fabrizio, 20060 Masate (MI) (IT); CAMBIAGHI, Andrea, 20060 Masate (MI) (IT)
(74) Representative: Cammareri, Emanuele

(56) References cited:
- EP-A2- 2 589 947
- AT-A4- 505 626
- US-A- 4 991 443
- US-A- 5 083 463
- US-A1- 2016 223 004

## Description

### TECHNICAL FIELD

The present invention relates to the field of vibration testing, in particular to the field of equipment for carrying out vibration tests in an industrial context.

### STATE OF THE ART

In the industrial environment, it is well known to conduct tests in which the most severe conditions that a product must be able to withstand without damage in order to be considered suitable for the purpose for which it was designed are simulated. In this context, vibration tests are of particular importance because almost all products have to be able to withstand alternating acceleration during their service life.

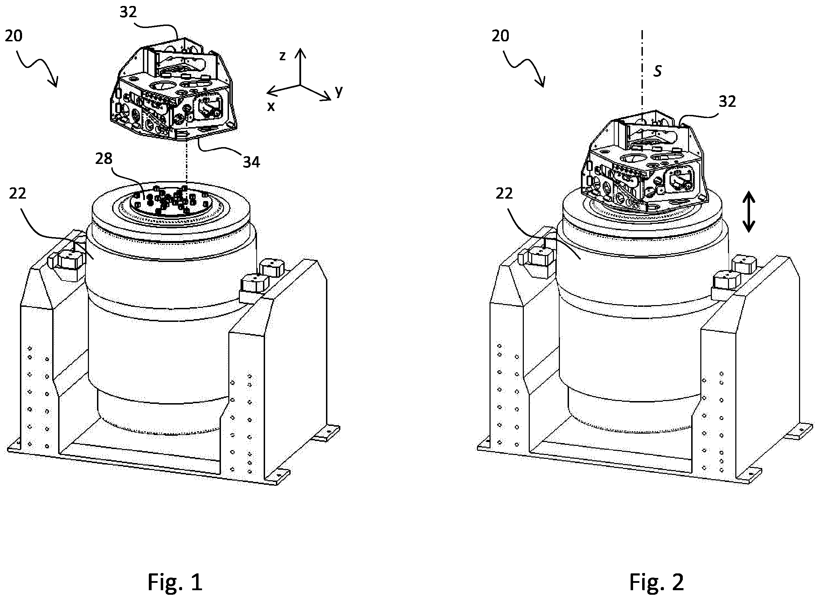

With particular reference to the attached Figures 1 to 4, a machine, equipment and method for conducting vibration tests in a self-known manner are briefly described below. The vibration test machine 20 comprises an actuator 22 and a control unit 24 (not shown in Figures 1 to 4) configured to control the actuator 22. The actuator 22 (also known as a shaker) may be electromechanical or hydraulic depending on the different types of stresses it has to generate. The actuator 22 is configured to generate stresses along a single predetermined axis, hereinafter referred to as the stress axis S. Each individual machine 20, in accordance with its own characteristics, is therefore suitable for generating alternating stresses within certain intervals of frequency, intensity of acceleration, and maximum displacement. In addition, the control unit 24 is usually able to control different sequences of stresses, for example cyclic (typically sinusoidal) or random stresses, depending on the type of test to be conducted, in order to simulate different operating conditions of the product 26.

In the context of vibration tests, in particular those intended to evaluate the product 26 for a particular certification, it is usually required that all the ways in which each individual test campaign is conducted comply with specific regulations. This allows to obtain results that are at the same time significant, repeatable and comparable with the results obtained in different test campaigns.

The actuator 22 is firmly connected to a vibrating plate, commonly called armature 28 of the shaker, to which it rigidly transmits the stresses. The armature 28 includes a series of threaded holes 30, the arrangement and dimensions of which follow a well-established standard among the various manufacturers of actuators 22.

Conducting a vibration test campaign on a given product 26 requires that the latter be firmly and repeatably attached to the armature 28, so that the latter in turn can rigidly transmit to the product 26 the stresses it receives from the actuator 22.

In order to connect the product 26 to the armature 28, the use of a special restraining fixture, commonly called fixture 32, is known. The fixture 32 has the particularity of being made specifically for the product 26 under test, so as to be able to hold it firmly and rigidly. Typically, the product 26 requires to be subjected to stress testing on its three proper axes *xyz.* The stress on the three axes can be obtained using horizontal vibration tables or using the single stress axis S of the actuator 22 by constraining the fixture 32 in three different ways.

In the first case, the fixture 32 comprises a single fixing wall 34 and several mountings on different machines in order to align the product 26 to the desired stress axis.

In the case where only the actuator 22 and a single stress axis S are available, the fixture 32 usually allows it to be constrained to the armature 28 in three different positions, so that in each position one of the three proper axes *xyz* of the product 26 is aligned with the stress axis S from time to time. In other words, the fixture 32 typically comprises three fixing walls 34, wherein each fixing wall 34 is perpendicular to a proper axis of the product 26 and each fixing wall 34 is provided with standard holes 36 for assembly on the armature 28. These features of the fixture 32 allow a complete (triaxial) test campaign to be conducted along the three *xyz* proper axes of the product 26.

Although widely appreciated, the known solution described above is not free from disadvantages.

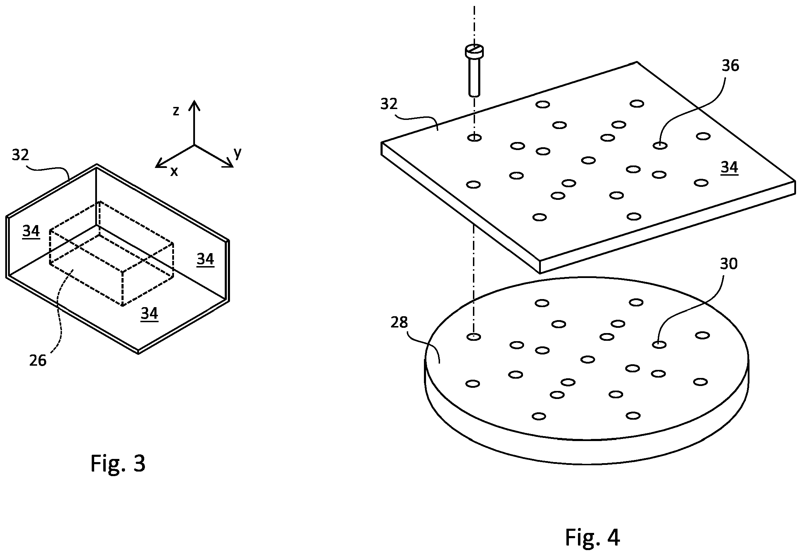

As already mentioned, the way of assembling the fixture 32 on the armature 28 requires a series of constraint points arranged according to a predefined pattern, shown schematically in figure 4. This configuration of the constraint results in a corresponding rather numerous series of fixing screws. Each fixing screw must be positioned and tightened with a predefined tightening torque prior to testing along one axis (e.g. *x*). Subsequently, in order to conduct the tests on the next axis (e.g. *y*), all fixing screws must be loosened, removed, repositioned and tightened again. In a normal triaxial test campaign, the entire operation must be repeated at least three times, once for each of the three axes *xyz* of the product 26. However, more complex test campaigns may also require more repetitions of the operation.

The operation of assembling and disassembling the fixture 32 from the armature 28, which is already long and laborious in itself due to the large number of fixing screws involved, can be made even more complicated by the fact that the product 26 must be kept constrained on the fixture 32 and that, due to the geometry required for the test (see diagram in figure 3), the product 26 often prevents access to the fixing screws.

There is therefore a need to be able to provide a vibration test machine and fixture that allows simplified use and handling.

### OBJECTS AND SUMMARY OF THE INVENTION

It is an object of the present invention to overcome the drawbacks of the prior art.

In particular, it is a task of the present invention to provide a vibration test fixture which allows a faster assembly, compared to the prior art, of the fixture to the respective machine. In particular, a task is to enable an assembly that does not require the use of fixing screws.

US 5 083 463 discloses a vibration test fixture assembly for releasably securing a test object to the top surface of a sliptable and for rotatably supporting the test object so that the test object can be repositioned between vibration tests without detaching the test object from the fixture. The assembly comprises a bottom plate, a top plate positioned on top of the bottom plate, and a plurality of spring-loaded bearing assemblies between the top and bottom plates for permitting the top plate to rotate relative to the bottom plate except when a downward force of sufficient magnitude to overcome the spring bias of the bearing assemblies is applied to the top plate. The assembly also comprises a plurality of clamps positioned adjacent the top plate for applying a downward force to the top plate sufficient to overcome the spring bias of the bearing assemblies and cause the top plate to engage the bottom plate. The test object is secured to the top plate and the bottom plate is secured to the top surface of a sliptable.

AT 505 626 discloses a wood connection comprising shaped eyelets.

US2016223004A1 discloses a unit locking system which includes a first fastening member having a proximal end having a first head portion and a distal end connected to a first surface and a second fastening member having a proximal end having a second head portion and a distal end connected to a second surface. The unit locking system further includes a unit having an aperture including an insertable first end portion and a slot portion having a second end portion. The insertable portion of the aperture is configured to receive the first head portion of the first fastening member and the second head portion of the second fastening member. The unit is locked to the mounting surface when the first head portion and second head portion are inserted into the aperture such that first fastening member engages the first end portion and the second fastening member is moved into engagement with the second end portion.

Furthermore, it is a task of the present invention to provide a vibration test fixture which allows for a rapid assembly which is equivalent, in terms of reliability, to a conventional type of fixture.

Finally, a task of the present invention is to provide a vibration test fixture that maintains compatibility with established industry fixture standards.

These and other objects and tasks of the present invention are achieved by means of an accessory plate in accordance with claim 1, by means of a corresponding fixture in accordance with claim 5 and by means of a vibration test machine in accordance with claim 10. Further features are defined in the dependent claims. All the appended claims form an integral part of the present description.

Further features and objects of the present invention will become clearer from the following description.

### BRIEF DESCRIPTION OF THE DRAWINGS

The invention will be described herein by reference to certain examples, provided for explanatory and non-limiting purposes, and illustrated in the accompanying drawings. These drawings illustrate different aspects and embodiments of the present invention and, where appropriate, similar reference numerals illustrating similar structures, components, materials and/or elements in different figures are indicated by similar reference numerals. Furthermore, for clarity of illustration, some references may not be repeated in all figures.
Figure 1 is an axonometric view of a vibration test machine and its fixture according to the prior art, in a disassembled configuration;
Figure 2 is a similar view to figure 1, in an assembled configuration;
Figure 3 is a schematic view in axonometry of a fixture, represented only by the three orthogonal fixing walls, and of the related product under vibration test;
Figure 4 is a schematic view in axonometry of a shaker armature and a fixing wall of the related fixture in accordance with the prior art, in a disassembled configuration;

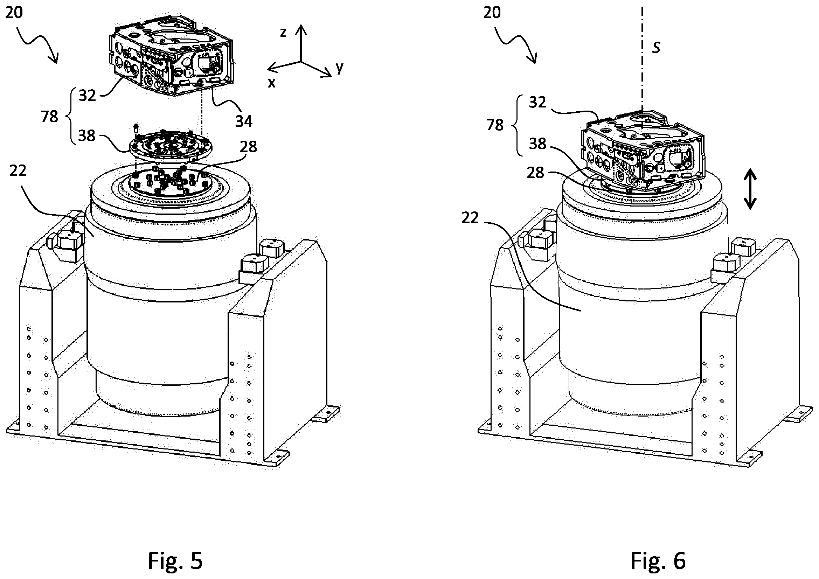

Figure 5 is an axonometric view of a vibration test machine and related fixture in accordance with the invention, in a disassembled configuration;
Figure 6 is a similar view to figure 4, in an assembled configuration;

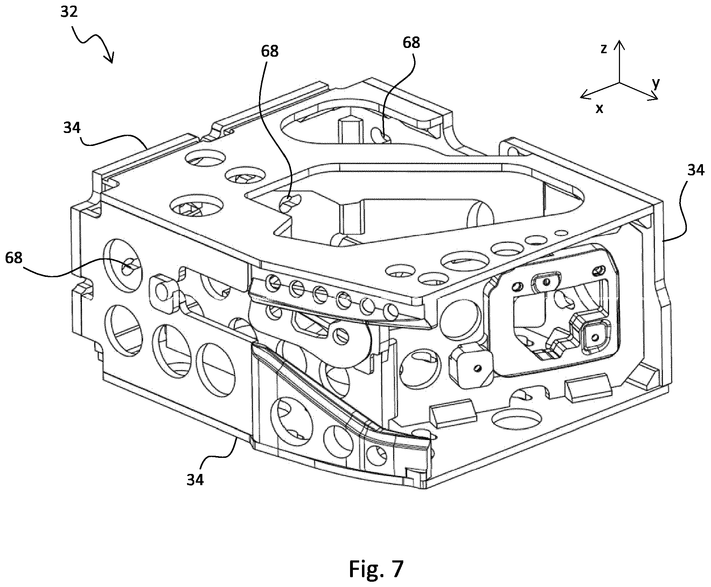

Figure 7 is an axonometric view of a vibration test fixture in accordance with the invention;
Figures 8 are three orthogonal projections of the fixture of figure 7;
Figure 9 is a schematic axonometric view of a shaker armature and associated fixture in accordance with the invention, in a disassembled configuration;
Figures 10.a-10.c are three enlarged views of the detail indicated by X in figure 9;
Figures 11.a and 11.b are plan views of a shaker armature and associated fixture schematically shown solely as a fixture wall in accordance with the invention, in two successive stages of assembly;
Figure 12 is a schematic view of a vibration test machine in accordance with the invention, in which the accessory plate is seen in a section similar to that operated along trace XII-XII of figure 9; and
Figures 13.a-13.d are schematic views in a section similar to that of figure 12 of an accessory plate and associated fixture in accordance with the invention, in some successive stages of assembly.

### DETAILED DESCRIPTION OF THE INVENTION

While the invention is susceptible to various modifications and alternative constructions, certain preferred embodiments are shown in the drawings and will be described in detail below. The subject-matter for which protection is sought by the present invention is defined by the claims.

The description deals in detail with the aspects and technical features peculiar to the invention, whereas the known aspects and technical features *per se* can only be mentioned. For such aspects, the foregoing applies with respect to the prior art.

The use of "for example", "etc.", "or" indicates non-exclusive alternatives without limitation unless otherwise indicated. The use of "comprises" and "includes" means "comprises or includes but not limited to" unless otherwise indicated.
The invention relates to an assembly according to the independent claim 1.

As the skilled person can well understand, the accessory plate 38 of the invention is intended to be interposed between a vibration test machine 20, known per se, and the corresponding fixture 32. This arrangement of the accessory plate 38 intuitively and unambiguously gives rise to the indications employed below "machine-side 40" and "fixture-side 42" to indicate the two sides of the accessory plate 38. In particular, the machine-side 40 is intended, in use, to be supported and then constrained on the armature 28 of the vibration test machine 20; the fixture-side 42 is intended to remain accessible to receive, from time to time, a fixing wall 34 of a respective fixture 32.

The accessory plate 38 of the invention develops predominantly in one plane (indicated by *xy* in the appended figures). The plate thickness develops in the direction perpendicular to the prevailing plane of development (direction indicated by z in the appended figures).

The through holes 36 provided on the accessory plate 38 comply with one of the standards commonly used in the industry. In particular, the through-holes 36 provided in the accessory plate 38 are identical in size and arrangement to the holes provided in the fixing wall 34 of a fixture 32 of known type. Thus, the accessory plate 38 of the invention is intended to be constrained to the armature 28 of a vibration test machine 20 in exactly the same way as the fixing wall 34 of a fixture 32 of known type.

On the side-fixture 42 of the accessory plate 38, a plurality of screws 44, preferably with a smooth collar, are arranged, which protrude in a receding direction from the plane *xy* of the accessory plate 38. In other words, the screws 44 protrude in the z-direction. Each screw 44 comprises a stem 50, which extends for a height *h1* in the *z* direction, and a head 52 which extends for a height *h2* in the *z* direction. Furthermore, the head 52
extends, with respect to the stem 50, parallel to the plane *xy* of the accessory plate 38. In particular, the cross-section of the stem 50 has a characteristic dimension *p*, while the cross-section of the head 52 has a characteristic dimension *d*, where *p < d.* In the embodiments depicted in the attached figures, the screws 44 have both the stem 50 and the head 52 having a circular cross-section. Although many other configurations are possible, this configuration is particularly advantageous due to the ease of making the screws 44. Thus, in these embodiments, the section of the stem 50 has a diameter *p*, while the section of the head 52 has a diameter *d*, where *p < d.*

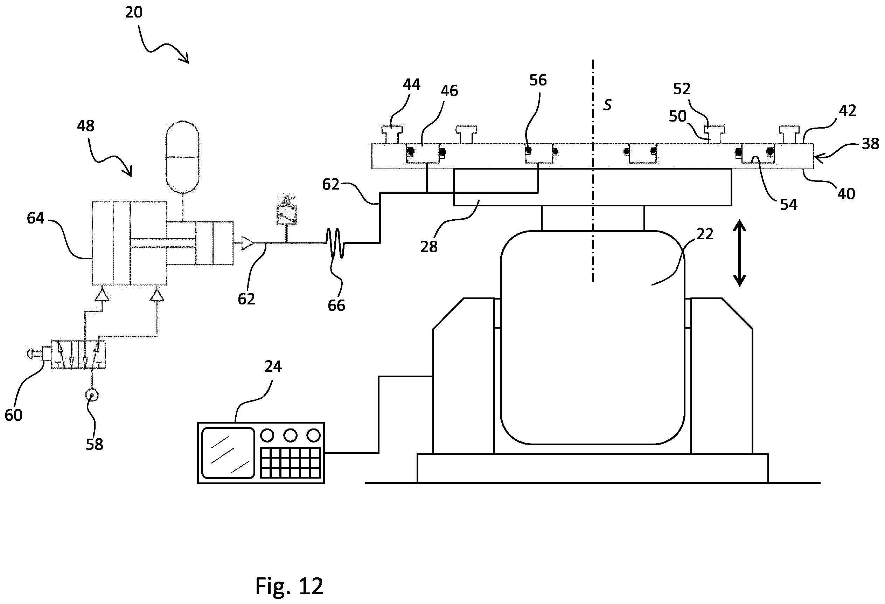

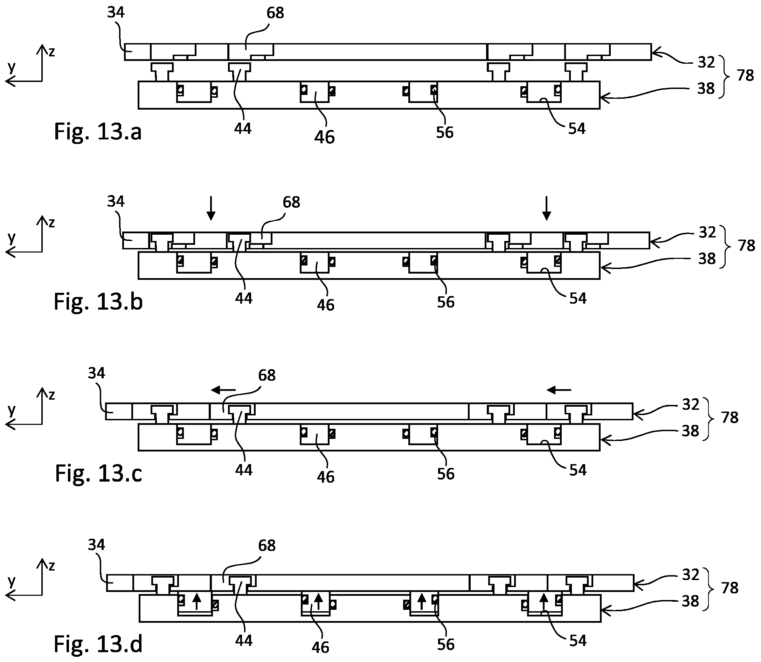

As mentioned above, each push element 46 is movably received in a seat 54, preferably it is received in a complementary shaped seat 54 formed in the plate thickness. The push element 46 is movable in the direction perpendicular to the *xy* plane of prevailing development of the accessory plate 38; in accordance with the embodiments of the attached figures, the push element 46 is movable in the *z* direction. Advantageously, the push element 46 is received tightly in the respective seat 54, for example by means of suitable seals 56 arranged between the push element 46 itself and the walls of the seat 54 (see, for example, figures 12 and 13).

By way of example, the push element 46 may advantageously assume a circular shape and be movable along the axis perpendicular to the circular shape. Although other shapes are possible to meet specific requirements, the circular shape of the push elements 46 and associated seats 54 is advantageous due to its simplicity of construction. Furthermore, the circular shape allows the use of very simple seals 56, for example in the form of O-rings. In particular, the seals 56 can be received in special recesses made in the side walls of the seat 54 or, respectively, of the push element 46. Preferably, the recesses are made in the side walls radially facing outwards (see Figures 12 and 13). In this way, the O-ring seals 56 are held in position in the respective seats 54 simply by their own elasticity.

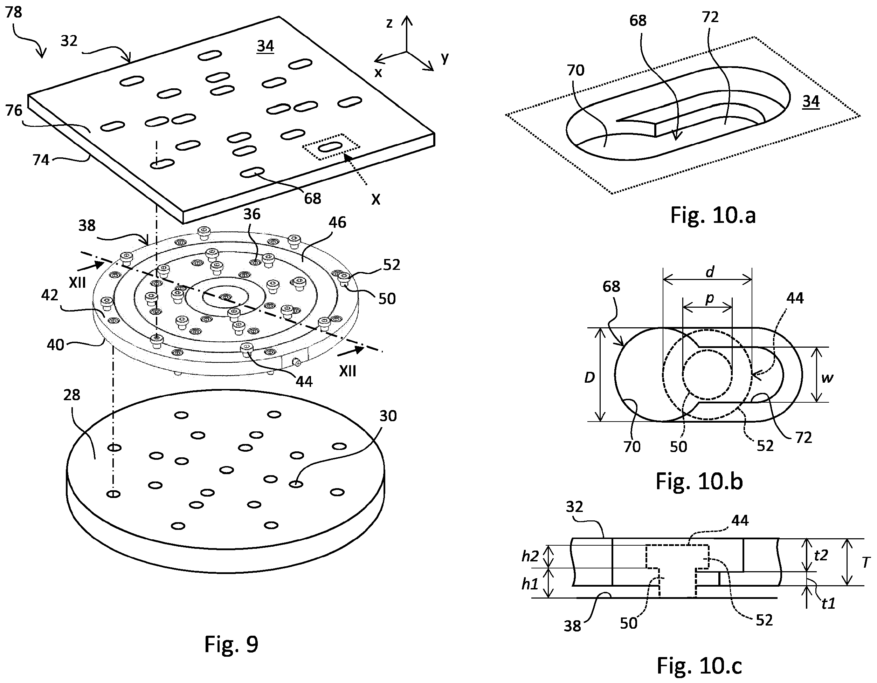

In the embodiments depicted in the appended figures, the accessory plate 38 of the invention comprises two push elements 46 (see Figures 9, 12 and 13). The two push elements 46 take the form of two concentric rings, or concentric circular crowns. Although other configurations are possible to meet specific requirements, the shape of the concentric rings is particularly advantageous for the push elements 46. In fact, as can be appreciated in particular in figure 9, the concentric ring shape allows for a rather high overall surface area of the push elements 46 and uniformly distributed over the entire accessory plate 38. Furthermore, the concentric ring shape allows the push elements 46 not to interfere either with the through-holes 36 or with the screws 44 which must remain firm and steady on the accessory plate 38. The concentric ring shape also enables the force generated by the push elements 46 to be distributed equally over all the screws 44.

As mentioned above, the system comprises activation means 48 configured to act on the push elements 46 of the accessory plate 38, so as to make them translate in the direction of the screws 44, i.e. away from the *xy* plane of the accessory plate 38, along the z-axis in the direction in which the side-fixture 42 faces.

Preferably, the activation means 48 comprise a system configured to feed a pressurized fluid to the seats 54 which receive the push elements 46. As the push elements 46 are tightly received in the respective seats 54, the supply of a pressurized fluid generates a force on each of the push elements 46 that imposes an outward translation on it, in particular in the z-direction. Preferably, the system comprises a pressure fluid source 58, an activation control 60 and a plurality of channels 62 for feeding the pressure fluid to the seats 54 of the push elements 46. At least some of these channels 62 may be obtained directly in the plate thickness.

The system for supplying a fluid under pressure is preferably a mixed pneumatic-hydraulic system. Although other solutions are possible, the use of compressed air as a pressure fluid has considerable advantages. First of all, as is well known, compressed air is a relatively inexpensive working fluid which does not require return lines but can be conveniently discharged into the atmosphere to release pressure. In the following, the activation means 48 are considered to comprise a mixed pneumatic-hydraulic system (schematically represented in figure 12), although alternatively, a purely hydraulic or purely pneumatic system or the like may be arranged to meet specific requirements.

Preferably, the system may comprise a pressure multiplier 64 in order to obtain a force on the push elements 46 greater than that which would be obtained by directly employing compressed air at the pressure provided by the source 58. In particular, in the section upstream of the pressure multiplier 64 (up to the activation control 60) the system is preferably pneumatic, while downstream of the pressure multiplier 64 (up to the accessory plate 38) the system is preferably hydraulic. In the hydraulic section of the system, substantially incompressible fluids are used, which may be of a different nature according to specific requirements. For example, in the case where vibration tests are to be carried out inside a climatic chamber that realises particular temperature conditions, the fluid under pressure may be glycol. Otherwise, in the most common cases where the tests are carried out at room temperature, the fluid under pressure may be oil.

Furthermore, due to the particular application, it is preferable that the implant is designed to cooperate effectively with the vibration test machine 20. In particular, it is preferable that the implant comprises a section suitable for dynamically decoupling two portions of the implant, for example comprising a flexible section 66. In fact, as the skilled person can well understand, a portion of the channels 62 of the implant is mounted on board the accessory plate 38 and is therefore intended to vibrate together with the armature 28. At the same time, it is preferable that the remaining portion of the implant remains fixed to the ground, without being affected by the vibrations. The interposition of a flexible section 66 between the two portions makes it possible to interrupt the propagation of vibrations.

As an alternative to a pressurised fluid supply system, and in particular as an alternative to a mixed pneumatic-hydraulic system, in accordance with certain embodiments, the activation means 48 may also comprise one or more electromechanical actuators, or the like.

The operation of the accessory plate 38 will be described in detail later, after other aspects of the invention are also described in detail.

The invention relates to a vibration test fixture 32 suitable for being coupled, via the accessory plate 38 described above, to the armature 28 of a vibration test machine 20, wherein the fixture 32 comprises a support for a product 26 to be subjected to vibration testing and at least one fixing wall 34, wherein the fixing wall 34 comprises a plurality of shaped eyelets 68, each comprising a hole 70 having characteristic dimension *D* from which a slot 72 having width *w,* where *w* < *D*, departs laterally. Due to the shape they assume, such shaped slots 68 may also be referred to as "keyhole holes".

The fixture 32 of the invention may comprise from one to three fixing walls 34. When there are two or three fixing walls 34, these are perpendicular to each other. Preferably, the fixture 32 of the invention comprises three fixing walls 34 perpendicular to each other, such that each of the fixing walls 34 is perpendicular to an axis of an orthogonal triad *xyz.* In this way, the fixture 32 allows, in a manner known in itself, to carry out a complete (triaxial) testing campaign on the relevant product 26.

Preferably, the shaped eyelets 68 take the form depicted in the attached figures (see figures 10 in particular). In accordance with this embodiment, each shaped eyelet 68 comprises a circular hole 70 having a diameter *D* from which a slot 72 having a width *w,* wherein *w* < *D*, radially departs. Although other embodiments are possible, for example in which the hole 70 has a square or polygonal shape, the embodiment in which the hole 70 has a circular shape has some important advantages. In particular, circular holes can be made very easily with the most common machining machines.

Preferably, the fixing wall 34 of the fixture 32 comprises a plate-side 74, which in use is intended to be abutted to the accessory plate 38, as well as a product-side 76, which in use faces the support and/or the product 26. The side-plate 74 and the side-product 76 are separated by a wall thickness *T*. The shape described above for the shaped slots 68, depending on the wall thickness *T*, may fully or only partially involve the wall thickness *T*.

In particular (see Figures 10.a and 10.c), the shaped slot 68 extends for a thickness *t1* from the plate-side 74 towards the inside of the wall thickness *T*. It is therefore necessary that *t1* ≤ *T.* In the event that *t1* <*T,* for the remaining thickness *t2*, from *t1* up to the product-side 76, the eyelet assumes an oval shape with constant width *D* (see figures 10).

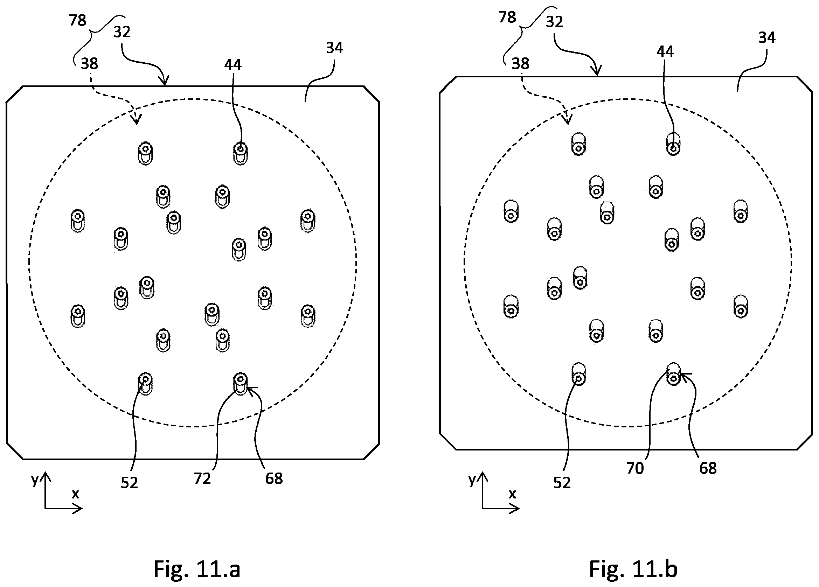

The invention relates to an assembly 78 comprising an accessory plate 38 and a fixture 32, both in accordance with the foregoing. In particular, in the assembly 78 of the invention, the screws 44 of the accessory plate 38 and the shaped eyelets 68 of the fixture 32 have the same arrangement. In other words, as can be seen particularly in Figures 9 and 11, the screws 44 are arranged in plan on the accessory plate 38 according to a predetermined pattern and the shaped eyelets 68 are arranged in plan on the fixture wall 34 according to the same predetermined pattern. In this way, by approaching the side-plate 74 of the fixture 32 to the side-fixture 42 of the accessory plate 38, a screw 44 meets the hole 70 of a respective shaped eyelet 68.

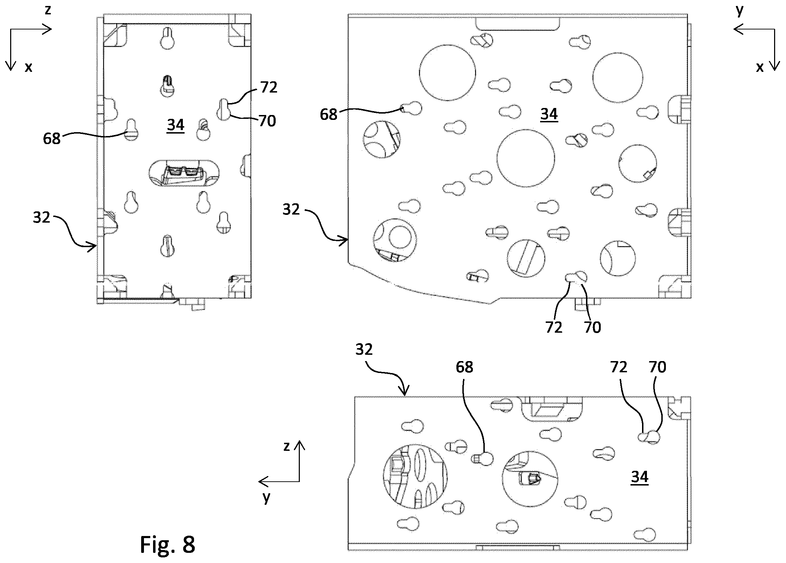

As can be seen in Figures 8, in the fixture 32 of the invention, the smaller size fixing walls 34 can only reproduce a part of the predetermined pattern for the shaped eyelets 68, preferably a central part of the pattern.

Advantageously, in the assembly 78 of the invention, one or more of the following relationships apply (in this respect, see in particular figure 10.b):
- the characteristic dimension d (typically the diameter *d*) of the head 52 of the screw 44 of the accessory plate 38 is smaller than the characteristic dimension *D* (typically the diameter *D*) of the hole 70 of the shaped eyelet 68 of the fixing wall 34 of the fixture 32: *d* < *D*.
- the characteristic dimension *p* (typically the diameter *p*) of the stem 50 of the screw 44 of the accessory plate 38 is smaller than the width *w* of the slot 72 of the shaped eyelet 68 of the fixing wall 34 of the fixture 32: *p* < *w.*
- the characteristic dimension *d* (typically the diameter *d*) of the head 52 of the screw 44 of the accessory plate 38 is greater than the width *w* of the slot 72 of the shaped eyelet 68 of the fixing wall 34 of the fixture 32: *d > w.*

With particular reference to Figures 11 and 13, it is described below how the assembly 78 of the invention may be assembled. The side-plate 74 of any fixing wall 34 of the fixture 32 may be approached by the side-fixture 42 of the accessory plate 38 in such a way that each shaped eyelet 68 is placed at the corresponding screw 44, according to the common predefined pattern (figure 13.a). With a movement along the *z-axis,* the side-plate 74 of the fixing wall 34 may be supported on the side-fixture 42 of the accessory plate 38, so that the screws 44 are received in the holes 70 of the respective shaped eyelet 68 (figures 11.a and 13.b). Subsequently, the fixing wall 34 may be translated in the *xy* plane, for example in the y direction, so that the stems 50 of the screws 44 engage the slots 72 of the shaped eyelets 68 (Figures 11.b and 13.b). Finally, by actuating the activation means 48, it is possible to make the push elements 46 translate in the z-direction, so that they rest on the side-plate 74 of the fixing wall 34 and push the fixing wall 34 itself away from the accessory plate 38. In this way, the slots 72 of the shaped eyelets 68 are pushed against the heads 52 of the screws 44, firmly locking the fixing wall 34 and thus the entire fixture 32 against the accessory plate 38.

In accordance with certain embodiments of the assembly 78 of the invention, one or more of the following relationships apply (in this regard, see in particular figure 10.c):
- the height *h1* of the stem 50 of the screw 44 is greater than the thickness *t1* of the shaped eyelet 68: *h1* > *t1.*
- If the thickness *T* of the fixing wall 34 is greater than the thickness *t1* of the shaped eyelet 68, then a thickness *t2* of the oval eyelet of constant width must be provided.

In some embodiments, the height *h2* of the head 52 of the screw 44 is less than the thickness *t2* of the constant width oval slot. In such a case, when the fixture 32 is constrained to the accessory plate 38, the heads 52 of the screws 44 do not constitute any encumbrance on the product-side 76.

The invention relates to a vibration test machine 20 comprising an actuator 22, a control unit 24 and an armature 28, wherein the armature 28 comprises an accessory plate 38 in accordance with the foregoing.

In particular, the accessory plate 38 may be coupled to, integrated in or substituted for the armature 28 normally present in a vibration test machine 20. Thus, as the skilled person may well understand, the vibration test machine 20 of the invention may be obtained from a vibration test machine 20 of known type, in which an accessory plate 38 in accordance with the invention is substituted for, integrated in or firmly coupled to the conventional armature 28.

The characteristics of the accessory plate 38 included in the machine 20 according to the invention are in all respects similar to those set forth above in the discussion of the accessory plate 38 itself, to which reference is made for a detailed description.

Similarly, the machine 20 in accordance with the invention requires the use of a fixture 32 in accordance with the invention, already described above.

As the skilled person can well understand, the invention overcomes the disadvantages highlighted above in relation to the prior art.

In particular, the invention provides a vibration test fixture that allows a faster assembly, compared to the prior art, of the fixture 32 to the associated machine 20. In particular, it allows for an assembly that does not require the use of fixing screws.

Furthermore, the invention makes available vibration test equipment that allows for rapid assembly that is equivalent in reliability to a conventional type of fastening.

Finally, the invention makes available a vibration test fixture that maintains compatibility with established industry fastening standards.

In conclusion, all details are substitutable by other technically equivalent elements; the features described in connection with a specific embodiment can also be used in other embodiments; the materials used as well as the contingent shapes and dimensions can be any according to the specific implementation requirements without going beyond the scope of protection of the following claims.

## Claims

1. Assembly (78) for vibration tests, comprising a system and a fixture (32), wherein:
- the system comprises an accessory plate (38) for fixing the fixture (32) on a vibration test machine (20) and activation means (48), the accessory plate (38) having a machine-side (40) and a fixture-side (42) spaced by a plate thickness, wherein the accessory plate (38) comprises:
- a pattern of through holes (36) for fixing the fixture (32) on an armature (28) of the vibration test machine (20);
- a plurality of screws (44) protruding perpendicularly from the accessory plate (38) from the fixture-side (42);
- at least one push element (46) received in movable manner in a seat (54) in the plate thickness;
and wherein the push element (46) is adapted to translate in the direction of the screws (44) as a result of the action of the activation means (48);
and wherein the fixture (32) is suitable for being coupled to the armature (28) of the vibration test machine (20), wherein the fixture (32) comprises a support for a product (26) to be subjected to the vibration tests and at least one fixing wall (34), wherein the fixing wall (34) comprises a plurality of shaped eyelets (68), each one comprising a hole (70) having characteristic size *D* from which a slot (72) laterally departs having width *w,* where *w* < *D.*

2. Assembly (78) according to claim 1, wherein the push element (46) has a circular shape and is movable along an axis perpendicular to the circular shape.

3. Assembly (78) according to the preceding claim, comprising two push elements (46) having the shape of concentric rings.

4. Assembly (78) according to one or more of the preceding claims, wherein the activation means (48) comprise a system configured for feeding a fluid under pressure to the seats (54) which receive the at least one push element (46).

5. Assembly (78) according to claim 1, wherein the fixture (32) comprises from one to three fixing walls (34) perpendicular to each other.

6. Assembly (78) according to claim 1, wherein the screws (44) of the accessory plate (38) and the shaped eyelets (68) of the fixture (32) have the same arrangement.

7. Assembly (78) according to claim 1, wherein one or more of the following relations is true:
- the characteristic size *d* of the head (52) of the screw (44) of the accessory plate (38) is smaller than the characteristic size *D* of the hole (70) of the shaped eyelet (68) of the fixing wall (34) of the fixture (32): *d* < *D*;
- the characteristic size *p* of the stem (50) of the screw (44) of the accessory plate (38) is smaller than the width *w* of the slot (72) of the shaped eyelet (68) of the fixing wall (34) of the fixture (32): *p* < *w*;
- the characteristic size *d* of the head (52) of the screw (44) of the accessory plate (38) is larger than the width *w* of the slot (72) of the shaped eyelet (68) of the fixing wall (34) of the fixture (32): *d* > *w.*

8. Vibration test machine (20) comprising a shaker (22), a control unit (24), an armature (28) and an assembly (78) according to one or more of the preceding claims.

## Patentansprüche

1. Anordnung (78) für Schwingungsprüfungen, die ein System und eine Vorrichtung (32) aufweist, wobei: - das System eine Zubehörplatte (38) zur Befestigung der Vorrichtung (32) an einer Schwingungsprüfmaschine (20) sowie Betätigungsmittel (48) umfasst, wobei die Zubehörplatte (38) eine maschinenseitige Fläche (40) und eine vorrichtungsseitige Fläche (42) aufweist, die durch eine Plattendicke voneinander beabstandet sind, wobei die Zubehörplatte (38) umfasst: - ein Lochmuster von Durchgangsbohrungen (36) zur Befestigung der Vorrichtung (32) an einer Ankerplatte (28) der Schwingungsprüfmaschine (20); - eine Mehrzahl von Schrauben (44), die von der Zubehörplatte (38) senkrecht aus der vorrichtungsseitigen Fläche (42) vorstehen; - mindestens ein Drückelement (46), das beweglich in einer Aufnahme (54) innerhalb der Plattendicke aufgenommen ist; und wobei das Drückelement (46) so ausgelegt ist, dass es infolge der Wirkung der Betätigungsmittel (48) in Richtung der Schrauben (44) verlagert wird; und wobei die Vorrichtung (32) geeignet ist, mit der Ankerplatte (28) der Schwingungsprüfmaschine (20) gekoppelt zu werden, wobei die Vorrichtung (32) eine Aufnahme für ein Produkt (26), das den Schwingungsprüfungen unterzogen werden soll, sowie mindestens eine Befestigungswand (34) umfasst, wobei die Befestigungswand (34) eine Mehrzahl geformter Ösen (68) aufweist, von denen jede eine Öffnung (70) mit einer charakteristischen Größe D aufweist, von der sich seitlich ein Schlitz (72) mit einer Breite w erstreckt, wobei w < D ist.

2. Anordnung (78) nach Anspruch 1, wobei das Drückelement (46) kreisförmig ist und entlang einer Achse beweglich ist, die senkrecht zur Kreisform steht.

3. Anordnung (78) nach dem vorhergehenden Anspruch, die zwei Drückelemente (46) in Form konzentrischer Ringe aufweist.

4. Anordnung (78) nach einem oder mehreren der vorhergehenden Ansprüche, wobei die Betätigungsmittel (48) ein System aufweist, das dazu konfiguriert ist, ein unter Druck stehendes Fluid zu der Aufnahme (54) zuzuführen, welche das mindestens eine Drückelement (46) aufnehmen.

5. Anordnung (78) nach Anspruch 1, wobei die Vorrichtung (32) eine bis drei zueinander senkrechte Befestigungswände (34) aufweist.

6. Anordnung (78) nach Anspruch 1, wobei die Schrauben (44) der Zubehörplatte (38) und die geformten Ösen (68) der Vorrichtung (32) die gleiche Anordnung aufweisen.

7. Anordnung (78) nach Anspruch 1, wobei eine oder mehrere der folgenden Beziehungen zutreffen: - die charakteristische Größe d des Schraubenkopfes (52) der Schraube (44) der Zubehörplatte (38) ist kleiner als die charakteristische Größe D der Bohrung (70) der geformten Öse (68) der Befestigungswand (34) der Vorrichtung (32): d < D; - die charakteristische Größe p des Schafts (50) der Schraube (44) der Zubehörplatte (38) ist kleiner als die Breite w des Schlitzes (72) der geformten Öse (68) der Befestigungswand (34) der Vorrichtung (32): p < w; - die charakteristische Größe d des Schraubenkopfes (52) der Schraube (44) der Zubehörplatte (38) ist größer als die Breite w des Schlitzes (72) der geformten Öse (68) der Befestigungswand (34) der Vorrichtung (32): d > w.

8. Schwingungsprüfmaschine (20), die einen Schwingerreger (22), eine Steuereinheit (24), eine Ankerplatte (28) sowie eine Anordnung (78) nach einem oder mehreren der vorhergehenden Ansprüche aufweist.

## Revendications

1. Ensemble (78) pour tests de vibration, comprenant un système et un dispositif de fixation (32), dans lequel :
- le système comprend une plaque accessoire (38) pour fixer le dispositif de fixation (32) sur une machine pour tests de vibration (20) et des moyens d'activation (48), la plaque accessoire (38) ayant un côté machine (40) et un côté dispositif de fixation (42) espacés d'une épaisseur de plaque, dans lequel la plaque accessoire (38) comprend :
- un motif de trous traversants (36) pour fixer le dispositif de fixation (32) sur une armature (28) de la machine pour tests de vibration (20) ;
- une pluralité de vis (44) faisant saillie perpendiculairement à partir de la plaque accessoire (38) depuis le côté dispositif de fixation (42) ;
- au moins un élément de poussée (46) reçu de manière mobile dans un siège (54) dans l'épaisseur de la plaque ;
et dans lequel l'élément de poussée (46) est adapté pour se déplacer en translation dans la direction des vis (44) à la suite de l'action des moyens d'activation (48) ;
et dans lequel le dispositif de fixation (32) est adapté pour être couplé à l'armature (28) de la machine pour tests de vibration (20), dans lequel le dispositif de fixation (32) comprend un support pour un produit (26) à soumettre aux tests de vibration et au moins une paroi de fixation (34), la paroi de fixation (34) comprenant une pluralité d'œillets façonnés (68), chacun comprenant un trou (70) présentant une taille caractéristique *D* d'où une fente (72) part latéralement en ayant une largeur *w,* où *w* <*D.*

2. Ensemble (78) selon la revendication 1, dans lequel l'élément de poussée (46) présente une forme circulaire et est mobile le long d'un axe perpendiculaire à la forme circulaire.

3. Ensemble (78) selon la revendication précédente, comprenant deux éléments de poussée (46) présentant la forme d'anneaux concentriques.

4. Ensemble (78) selon une ou plusieurs des revendications précédentes, dans lequel les moyens d'activation (48) comprennent un système configuré pour alimenter un fluide sous pression aux sièges (54) qui reçoivent l'au moins un élément de poussée (46).

5. Ensemble (78) selon la revendication 1, dans lequel le dispositif de fixation (32) comprend de une à trois parois de fixation (34) perpendiculaires les une aux autres.

6. Ensemble (78) selon la revendication 1, dans lequel les vis (44) de la plaque accessoire (38) et les œillets façonnés (68) du dispositif de fixation (32) présentent le même agencement.

7. Ensemble (78) selon la revendication 1, dans lequel une ou plusieurs des relations suivantes sont vraies :
- la taille caractéristique *d* de la tête (52) de la vis (44) de la plaque accessoire (38) est inférieure à la taille caractéristique *D* du trou (70) de l'œillet façonné (68) de la paroi de fixation (34) du dispositif de fixation (32) : *d* <*D* ;
- la taille caractéristique *p* de la tige (50) de la vis (44) de la plaque accessoire (38) est inférieure e à la largeur *w* de la fente (72) de l'œillet façonné (68) de la paroi de fixation (34) du dispositif de fixation (32) : *p* < *w*
- la taille caractéristique *d* de la tête (52) de la vis (44) de la plaque accessoire (38) est supérieure à la largeur *w* de la fente (72) de l'œillet façonné (68) de la paroi de fixation (34) du dispositif de fixation (32) : *d* > *w.*

8. Machine pour tests de vibration (20) comprenant un vibrateur (22), une unité de commande (24), une armature (28) et un ensemble (78) selon une ou plusieurs des revendications précédentes.
